# EUROPÄISCHE PATENTSCHRIFT

(11) **EP 3 504 699 B1**
(45) Veröffentlichungstag und Bekanntmachung des Hinweises auf die Patenterteilung: **02.09.2020**
(21) Anmeldenummer: 17752033.5
(22) Anmeldetag: 26.07.2017
(51) Int. Cl.: G09G 3/00, H04N 7/00, H04N 5/247, G08B 13/196, G09G 5/377, H04N 5/445, H04N 7/18

(54) **VORRICHTUNG UND VERFAHREN ZUR VERIFIZIERBAREN AUSGABE VON BILDERN DURCH EINEN BILDSCHIRM**
DEVICE AND METHOD FOR VERIFIABLY OUTPUTTING IMAGES BY MEANS OF A SCREEN
DISPOSITIF ET PROCÉDÉ D'AFFICHAGE VÉRIFIABLE D'IMAGES AU MOYEN D'UN ÉCRAN

(30) Priorität: 29.08.2016 DE 102016116031
(43) Veröffentlichungstag der Anmeldung: 03.07.2019
(73) Patentinhaber: Rheinmetall Electronics GmbH, 28309 Bremen (DE)
(72) Erfinder: HERFURTH, Kirk, 28309 Bremen (DE); EHLERS, Stefan, 28309 Bremen (DE); GERDES, Heiner, 28309 Bremen (DE); SCHETTEL, Andreas, 28309 Bremen (DE)
(74) Vertreter: Horn Kleimann Waitzhofer Patentanwälte PartG mbB
(86) Internationale Anmeldenummer: PCT/EP2017/068905
(87) Internationale Veröffentlichungsnummer: WO 2018/041482

(56) Entgegenhaltungen:
- WO-A1-2011/034645
- US-A- 5 258 837
- US-A1- 2002 141 731

## Beschreibung

Die vorliegende Erfindung betrifft eine Vorrichtung zur verifizierbaren Ausgabe von Bildern. Des Weiteren betrifft die vorliegende Erfindung ein Fahrzeug mit einer solchen Vorrichtung sowie ein Verfahren zur verifizierbaren Ausgabe von Bildern durch einen Bildschirm.

Beispielsweise bei militärischen Fahrzeugen, wie Panzern, kommen Vorrichtungen zur Ausgabe von Bildern zum Einsatz, welche an der Außenhaut des Fahrzeugs angeordnete Kameras und zumindest einen in dem Innenraum des Fahrzeugs angeordneten Bildschirm zur Ausgabe der von den Kameras aufgenommenen Bildern aufweisen. Dabei ist ein Multiplexer zwischen den Kameras und dem Bildschirm gekoppelt, welcher ausgangsseitig die Bilder einer ausgewählten Kamera aus der Menge der gekoppelten Kameras für den Bildschirm bereitstellt.

Dabei ist es möglich, dass die an der Außenhaut des Fahrzeugs angeordneten Kameras in unterschiedliche Richtungen zeigen. Da daher die Bilder oder Kamerabilder durch mehrere in unterschiedliche Richtungen zeigende Kameras erzeugt werden können, kann sich die Blickrichtung oder Sicht ausgehend von einem beobachteten Objekt auf dem Bildschirm ändern. Ein Fehler, beispielsweise ein in IEC 61508-4:2010 3.6.5 beschriebener Random-Hardware-Fehler, kann dazu führen, dass die auf dem Bildschirm dargestellte Sicht nicht mit der vom Benutzer ausgewählten Sicht bzw. der vom Gesamtsystem vorgegebenen Sicht übereinstimmt. Mit anderen Worten würde dieser Fehler bewirken, dass die auf dem Bildschirm dargestellten Bilder nicht von der vom Benutzer ausgewählten Kamera oder der vom Gesamtsystem vorgegebenen Kamera stammen. Ein Fehler in dem Multiplexer, welcher die Auswahl eines von mehreren Kamera-Kanälen der Kameras vornimmt, oder ein Fehler in der Ansteuerungslogik für den Multiplexer könnte zu diesem Fehlerbild, insbesondere Hazard gemäß IEC 61508-4:2010 3.1.2 und MIL-STD-882E 3.2.14, führen.

Eine besonders hohe Gefährdung ergibt sich, wenn die Kameras beispielsweise mit einer Waffenstation verknüpft sind und das auf dem Bildschirm angezeigte Bild für das Schießen auf Sicht benutzt wird.

Herkömmlicherweise wird versucht, einen solchen Hazard zu vermeiden, in dem zusätzliche elektronische Schaltungen, sogenannte Safety Functions gemäß IEC 61508-4:2010 3.5.1 oder Mitigation Measures gemäß MIL-STD-882E 3.2.21, vorgesehen werden, um die Funktion des Multiplexers abzusichern. Nachteilig bei einer solchen Lösung ist der zusätzliche Aufwand für eine solche elektronische Schaltung und, dass die Sicherheitsfunktion ausschließlich den Multiplexer und die Ansteuerung des Multiplexers überprüft.

Aus der US 5 258 837 A ist eine Überwachungsvorrichtung für ein Sicherheitssystem bekannt, welche einen Monitor und zwölf Videokameras umfasst. Eine Effekteinheit weist einen Pufferspeicher und einen Satz von 13 Videokompressionseinheiten auf. Zwölf dieser Einheiten erzeugen zwölf Zonen kleiner Größe, um kleine vollständige Bilder von den Videokameraausgängen auf dem Monitor anzuzeigen, und die 13. Einheit erzeugt eine zentrale Zone größerer Größe. Eine Auswahleinrichtung wählt einen beliebigen der Kameraausgänge zur Anzeige als das große Bild aus.

Weiterhin sind aus der US 2002/141731 A1 ein Verfahren und eine Vorrichtung zum Verarbeiten und zum digitalen Aufzeichnen eines Videosignals bekannt, in welchen Sender zum Erzeugen von Videosignalen ein externes Synchronisationssignal zum Synchronisieren der Sender empfangen. Ein Aufzeichner, der die Videosignale empfängt, weist einen Schalter auf, der die Sender nacheinander mit einem digitalen Videorecorder verbindet. Codesignale, die Identifikationscodes entsprechen, die Videosignalen zugeordnet sind, werden erzeugt. Eine Injektionsschaltung mischt Codesignale in Videosignale. Der digitale Videorecorder weist eine Kopie auf, die eine Schaltung zur Erzeugung von Zeit- und Datumssignalen enthält, um die empfangenen Signale zu komprimieren und mit den extrahierten Codes und der Zeit und dem Datum von Rekordersignalen an einen Speicher auszugeben, der diese Signale in endloser kaskadierter Rotation speichert. Neu gespeicherte Signale ersetzen die ältesten in Kaskade gespeicherten Signale. Ein Alarmdatensignal zum Auslösen des Alarmzustands der Vorrichtung wird empfangen und die Videosignale, die während des Alarmzustands aufgezeichnet werden, werden aufgezeichnet.

Ferner sind aus der WO 2011/034645 A1 ein System und ein Verfahren zum Bereitstellen einer Lageerkennung für ein Transportfahrzeug bekannt. Eine Anzahl von sensorischen Eingaben wird von Kameras empfangen, die um die Peripherie des Transportfahrzeugs positioniert sind. Die Anzahl der sensorischen Eingaben wird verarbeitet, um eine Anzahl von verarbeiteten Signalen zur Anzeige auf einer oder mehreren Anzeigen zu erzeugen. Benutzereingaben werden von unterschiedlichen Benutzern empfangen, die eine oder mehrere Ansichten angeben, die auf jeder der Anzeigen angezeigt werden sollen, wie sie von der Anzahl der sensorischen Eingaben empfangen und verarbeitet wurden. Die Anzahl der verarbeiteten Signale wird kommuniziert, um die eine oder mehreren Ansichten auf jeder der einen oder mehreren Anzeigen als Antwort auf den Empfang der Benutzereingabe anzuzeigen.

Vor diesem Hintergrund besteht eine Aufgabe der vorliegenden Erfindung darin, eine Lösung zur verifizierbaren Ausgabe von Bildern durch einen Bildschirm zu schaffen.

Diese Aufgabe wird durch die Gegenstände der Ansprüche 1 und 12 gelöst.

Gemäß einem ersten Aspekt wird eine Vorrichtung zur verifizierbaren Ausgabe von Bildern vorgeschlagen, welche einen Bildschirm zur Ausgabe von Bildern basierend auf Bilddaten, eine Mehrzahl N von Kamera-Einrichtungen, mit N ≥ 2, wobei eine jede der N Kamera-Einrichtungen eine Kamera zur Bereitstellung von Bilddaten basierend auf einer Aufnahme zumindest eines Kamerabilds und eine Integrations-Einheit zur Ausgabe von erweiterten Bilddaten basierend auf einer Integration eines kamera-spezifischen Anzeige-Elements in die bereitgestellten Bilddaten aufweist, und eine zwischen den N

Kamera-Einrichtungen und dem Bildschirm gekoppelte Multiplexer-Einrichtung aufweist, welche dazu eingerichtet ist, aus den von den N Kamera-Einrichtungen empfangenen erweiterten Bilddaten ausgewählte weitere Bilddaten ausgangsseitig für den Bildschirm bereitzustellen. Dabei ist der Bildschirm dazu eingerichtet, ein Bild mit dem kamera-spezifischen Anzeige-Element in einem Ausgabebereich des Bildschirms basierend auf den von der Multiplexer-Einrichtung bereitgestellten erweiterten Bilddaten auszugeben.

Durch die Ausgabe des Anzeige-Elements, welches kamera-spezifisch für die die Bilddaten bereitstellende Kamera ist, ist es auf einfache und sehr sichere Weise möglich, die Ausgabe der Bilder durch den Bildschirm zu verifizieren. Der Benutzer weiß, welche Kamera gewählt ist, und erhält durch das Anzeige-Element auf einfache Weise eine Information über Quelle der durch den Bildschirm angezeigten Bilder. Stimmt die gewählte Kamera mit der dem Anzeige-Element zugeordneten Kamera überein, so liegt kein Fehler vor und die Ausgabe des Bildschirms ist verifiziert. Stimmt die gewählte Kamera aber nicht mit der dem Anzeige-Element zugeordneten Kamera überein, so liegt ein Fehler vor und die Ausgabe des Bildschirms ist nicht verifiziert.

Im Falle des Vorliegens eines Fehlers kann der Benutzer geeignete Maßnahmen ableiten. Alternativ oder zusätzlich können die geeigneten Maßnahmen auch automatisch abgeleitet werden. Ein Beispiel für eine solche automatische Ableitung einer Maßnahme ist die automatische Schußverblockung einer Waffenstation, wenn beispielsweise die Kameras der Vorrichtung für ein Schießen auf Sicht eingesetzt werden.

Das Anzeige-Element kann auch als Symbol oder Kamera-Selektor bezeichnet werden. Das jeweilige Anzeige-Element ist eineindeutig einer der Kameras zugeordnet. Bei der Ausgabe des Bilds in dem Ausgabebereich des Bildschirms ist das kamera-spezifische Anzeige-Element beispielsweise dem Bild überlagert. Die eineindeutige Zuordnung zwischen Anzeige-Element und Kamera kann in der Darstellung des Bilds beispielsweise durch unterschiedliche Farben und/oder unterschiedliche Formen und/oder unterschiedliche Positionen innerhalb des Bilds ausgebildet sein.

Das folgende Beispiel verdeutlich die Funktionalität der vorliegenden Vorrichtung: Jedes von einer Kamera aufgenommene Kamerabild wird überlagert durch ein zusätzliches Anzeige-Element oder Symbol, welches für die aufnehmende Kamera spezifisch ist. Für das Beispiel, dass sich die kamera-spezifischen Anzeige-Elemente hinsichtlich ihrer Position in dem von dem Bildschirm dargestellten Bild unterscheiden, werden die Anzeige-Elemente für die verschiedenen Kameras derart erzeugt, dass die Anzeige-Elemente der verschiedenen Kameras an unterschiedlichen Positionen innerhalb des von dem Bildschirm ausgegebenen Bilds dargestellt werden. Bei der Darstellung am Bildschirm wird in Abhängigkeit der ausgewählten Kamera das Anzeige-Element oder Symbol immer an einer anderen Stelle erzeugt. Beispielsweise über eine Beschriftung am Gehäuse des Bildschirms, wie zum Beispiel ein Beschriftungsfeld oder ein Piktogramm, über einen Auswahltaster oder Auswahlschalter einer Kamerasicht kann mit Hilfe des eingeblendeten Anzeige-Elements oder Symbols ein direkter Bezug zu der ausgewählten Kamera hergestellt werden, welche die auf dem Bildschirm angezeigten Bilder erzeugt hat.

Ist beispielsweise das Anzeige-Element einer bestimmten Kamera der Mehrzahl von Kameras als ein oben links im Bild des Bildschirms dargestelltes rotes Rechteck ausgebildet, so wird, wenn die erweiterten Bilddaten von dieser bestimmten Kamera stammen, an dem Bildschirm dieses rote Rechteck ebenfalls oben links angezeigt. Der sich über diesem dargestellten roten Rechteck befindliche Auswahltaster oder Auswahlschalter ist dieser bestimmten Kamera zugeordnet. Der Bezug zu der ausgewählten Kamera kann also mit der dargestellten Kamerasicht auf einfache Weise hergestellt werden. Betätigt der Benutzer einen anderen Auswahltaster, so wird das rote Rechteck unter dem linken Auswahltaster nicht mehr zu sehen sein und es kann ein Anzeige-Element unter dem betätigten Auswahltaster angezeigt werden. Dieses Anzeige-Element kann wiederum als ein rotes Rechteck ausgebildet sein, kann allerdings auch eine andere Farbe, wie beispielsweise orange, und/oder eine andere Form, wie beispielsweise ein Dreieck, aufweisen. Im Fehlerfall würde der Benutzer einen Auswahltaster drücken und das dem Auswahltaster zugeordnete Anzeige-Element würde nicht korrekt dargestellt werden, was der Benutzer des Bildschirms optisch einfach erfassen kann.

Die Kamera kann beispielsweise als Videokamera, als Tagsichtkamera, als Wärmebildkamera, als Infrarot-Kamera oder als Fotokamera ausgebildet sein. Insbesondere können die N Kamera-Einrichtungen unterschiedliche Kameratypen umfassen.

Die Integrations-Einheit ist beispielsweise als Teil der jeweiligen Kamera ausgebildet. Alternativ kann die Integrations-Einheit auch der Kamera nachgeschaltet sein und in einer Steuervorrichtung, wie einem Mikroprozessor oder FPGA, integriert sein. Vorteilhafterweise wird aber das Anzeige-Element bereits in der Bildgenerierung der Kamera implementiert, so dass die funktionale Kette von der Bilderzeugung durch die Kamera bis zur Darstellung am Bildschirm abgedeckt ist, was sich in einem hohen Diagnosedeckungsgrad (Diagnostic Coverage (DC) beispielsweise gemäß IEC 61508-4:2010 3.8.6) vorteilhafterweise widerspiegelt.

Gemäß einer Ausführungsform sind die N kamera-spezifischen Anzeige-Elemente für die N Kameras jeweils unterschiedlich zueinander.

Insbesondere können die unterschiedlichen Anzeige-Elemente aus den folgenden Eigenschaften zusammengesetzt sein: Form, Farbe, Helligkeit, Rotation oder einer Kombination dieser.

Gemäß einer weiteren Ausführungsform ist das jeweilige Anzeige-Element statisch in dem Bild dargestellt. Gemäß einer weiteren Ausführungsform ist das Anzeige-Element als ein sich zeitlich veränderliches Symbol dargestellt. Vorteilhafterweise kann hierdurch der Benutzer oder Beobachter des Bildschirms zusätzlich feststellen, ob tatsächlich ein Live-Bild gesendet und dargestellt wird. Ist beispielsweise der Bildschirm eingefroren (Standbild), so wird sich das Anzeige-Element zeitlich nicht mehr ändern. Folglich kann der Benutzer aus der zeitlichen Veränderung des Anzeige-Elements ableiten, dass die ausgewählte Kamera noch immer Bilddaten sendet und damit ein Live-Bild vorliegt. Die Bilddaten kann ein potentielles Ruckeln des Bildes, das heißt die Kamera erzeugt ein Live-Bild, unterbricht die Übertragung und sendet dann wieder ein normales Live-Bild, zusätzlich festgestellt werden, wenn die Darstellung des Symbols nicht mehr fließend ist, das heißt das Symbol sich ebenfalls in seiner Bewegung ändert, zum Beispiel springt.

Gemäß einer weiteren Ausführungsform weisen die N kamera-spezifischen Anzeige-Elemente unterschiedliche Positionen in dem von dem Bildschirm ausgegebenen Bild auf.

Gemäß einer weiteren Ausführungsform ist der Bildschirm derart ausgebildet, dass der Ausgabebereich für ein jedes der N kamera-spezifischen Anzeige-Elemente einen eigenen kamera-spezifischen Teil-Ausgabebereich zur Anzeige des kamera-spezifischen Anzeige-Elementes umfasst.

Die Teil-Ausgabebereiche sind insbesondere disjunkt zueinander, so dass der Benutzer die in den Teil-Ausgabebereichen angezeigten Anzeige-Elemente auf einfachere und sicherere Weise differenzieren kann.

Gemäß einer weiteren Ausführungsform hat der Bildschirm außerhalb seines Anzeigebereichs N kamera-spezifische Anzeigemittel, wobei jedem der N Anzeigemittel genau eine der N Kameras zugeordnet ist.

Das jeweilige Anzeigemittel kann beispielsweise als eine Beschriftung am Bildschirm, als ein Auswahltaster oder als ein Auswahlschalter ausgebildet sein.

Gemäß einer weiteren Ausführungsform ist der Bildschirm derart ausgebildet, dass das jeweilige kamera-spezifische Anzeigemittel oberhalb des jeweiligen kamera-spezifischen Teil-Ausgabebereichs angeordnet ist.

Hierdurch ergibt sich vorteilhafterweise für den Benutzer des Bildschirms eine einfache optische Relation zwischen dem jeweiligen Anzeige-Element und dem jeweiligen, dem Anzeige-Element zugeordneten Anzeigemittel.

Gemäß einer weiteren Ausführungsform ist der Bildschirm derart ausgebildet, dass das jeweilige kamera-spezifische Anzeigemittel unterhalb des jeweiligen kamera-spezifischen Teil-Ausgabebereichs angeordnet ist.

Auch in dieser alternativen Ausführungsform ergibt sich für den Benutzer eine einfache visuelle Relation, welche eine hohe Sicherheit bei der Verifizierung der von dem Bildschirm ausgegebenen Bilder bewirkt.

Gemäß einer weiteren Ausführungsform ist der Bildschirm derart ausgebildet, dass das jeweilige kamera-spezifische Anzeigemittel seitlich neben dem jeweiligen kamera-spezifischen Teil-Ausgabebereich angeordnet ist.

Gemäß einer weiteren Ausführungsform ist das jeweilige kamera-spezifische Anzeigemittel als ein Leuchttaster zur Eingabe eines Benutzerbefehls zur Auswahl der dem Anzeigemittel zugeordneten Kamera ausgebildet.

Mittels des Leuchttasters gibt der Benutzer des Bildschirms Benutzerbefehle ein, mit denen er eine der Kameras auswählen kann, deren Bilder durch den Bildschirm ausgegeben werden. Mit anderen Worten wählt der Benutzer mit dem Leuchttaster die geeignete Kamerasicht aus.

Gemäß einer weiteren Ausführungsform weisen die N Leuchttaster unterschiedlich farbige Leuchtmittel auf.

Vorteilhafterweise wird durch die unterschiedlichen Farben die Möglichkeit der visuellen Differenzierung und der automatischen Differenzierung zwischen den Anzeige-Elementen weiter erhöht.

Gemäß einer weiteren Ausführungsform weisen die N kamera-spezifischen Anzeige-Elemente unterschiedliche Formen und/oder unterschiedliche Farben in dem von dem Bildschirm ausgegebenen Bild auf.

Gemäß des ersten Aspekts umfasst die Vorrichtung eine Analyse-Einheit, welche dazu eingerichtet ist, ein Analyse-Ergebnis zur Ermittlung der die Bilddaten bereitstellenden Kamera basierend auf einer Analyse des spezifischen Anzeige-Elements innerhalb der von der Multiplexer-Einrichtung bereitgestellten erweiterten Bilddaten zu ermitteln.

Durch die Analyse-Einheit ist es möglich, das durch den Bildschirm dargestellte Anzeige-Element automatisch zu ermitteln und dadurch diejenige Kamera, welche die aktuelle Quelle der durch den Bildschirm ausgegebenen Bilder ist, zu ermitteln. Die elektronische Erfassung des aktuellen Anzeige-Elements, beispielsweise die elektronische Positionserfassung des im Bild dargestellten Symbols, kann vorteilhafterweise mittels Software redundant ausgeführt sein.

Gemäß des ersten Aspekts umfasst die Vorrichtung eine Vergleichs-Einheit zum Vergleichen des von der Analyse-Einheit ermittelten Analyse-Ergebnisses mit einem aktuellen, von dem Benutzer des Bildschirms eingegebenen Benutzerbefehl zur Auswahl einer der N Kameras.

Vorteilhafterweise kann die Vergleichs-Einheit im Fehlerfall automatisch einen sicheren Zustand (Safe State beispielsweise gemäß IEC 61508-4:2010 3.1.13) erzwingen.

Gemäß einer weiteren Ausführungsform ist die Analyse-Einheit dazu eingerichtet, nicht nur die Position des Anzeige-Elements zu ermitteln, sondern zusätzlich auch das Nichtvorhandensein eines anderen Anzeige-Elements zu ermitteln. Hierdurch können vorteilhafterweise Bildüberlagerungen festgestellt werden. Gemäß des ersten Aspekts ist die Multiplexer-Einrichtung dazu eingerichtet, die Auswahl der erweiterten Bilddaten zur ausgangsseitigen Bereitstellung für den Bildschirm aus den von den N Kamera-Einrichtungen empfangenen erweiterten Bilddaten in Abhängigkeit des aktuellen Benutzerbefehls zu treffen.

Mit anderen Worten wählt die Multiplexer-Einrichtung einen von mehreren Kamera-Kanälen der angeschlossenen Kameras. Die Multiplexer-Einrichtung kann auch als Multiplexer bezeichnet werden.

Die jeweilige Einheit, zum Beispiel die Integrations-Einheit, die Analyse-Einheit oder die Vergleichs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder FPGA ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Des Weiteren wird ein Fahrzeug mit einer wie oben beschriebenen Vorrichtung zur verifizierbaren Ausgabe von Bildern vorgeschlagen, wobei die Kameras der N Kamera-Einrichtungen an einer Außenhaut des Fahrzeugs und der Bildschirm in einem Raum des Fahrzeugs angeordnet sind.

Das Fahrzeug ist vorzugsweise ein militärisches Fahrzeug. Das Fahrzeug kann dabei ein Panzer, ein LKW, ein Sonderfahrzeug, wie zum Beispiel ein Kran, ein Lader oder ein Bagger, oder ein Schiff sein.

Ferner wird ein Verfahren zur verifizierbaren Ausgabe von Bildern durch einen Bildschirm vorgeschlagen. Das Verfahren umfasst die folgenden Schritte:
Bereitstellen von Bilddaten basierend auf einer Aufnahme zumindest eines Kamerabilds durch eine jeweilige Kamera einer Mehrzahl N von Kamera-Einrichtungen, mit N ≥ 2,
Ausgeben von jeweiligen erweiterten Bilddaten basierend auf einer Integration eines kamera-spezifischen Anzeige-Elements in die bereitgestellten Bilddaten an eine Multiplexer-Einrichtung durch die Mehrzahl N von Kamera-Einrichtungen,
Bereitzustellen von ausgewählten erweiterten Bilddaten für den Bildschirm aus den von den N Kamera-Einrichtungen empfangenen erweiterten Bilddaten durch die Multiplexer-Einrichtung, und
Ausgeben eines Bilds mit dem kamera-spezifischen Anzeige-Element in einem Ausgabebereich des Bildschirms basierend auf den von der Multiplexer-Einrichtung bereitgestellten erweiterten Bilddaten.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausfühder Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines ersten Ausführungsbeispiels einer Vorrichtung zur verifizierbaren Ausgabe von Bildern,
- Fig. 2: zeigt ein schematisches Blockschaltbild eines ersten Ausführungsbeispiels eines Bildschirms für eine Vorrichtung nach Fig. 1,
- Fig. 3: zeigt ein schematisches Blockschaltbild eines zweiten Ausführungsbeispiels eines Bildschirms für eine Vorrichtung nach Fig. 1,
- Fig. 4: zeigt ein schematisches Blockschaltbild eines dritten Ausführungsbeispiels eines Bildschirms für eine Vorrichtung nach Fig. 1,
- Fig. 5 - 7: zeigen schematische Blockschaltbilder eines vierten Ausführungsbeispiels eines Bildschirms für eine Vorrichtung nach Fig. 1,
- Fig. 8: zeigt ein schematisches Blockschaltbild eines zweiten Ausführungsbeispiels einer Vorrichtung zur verifizierbaren Ausgabe von Bildern, und
- Fig. 9: zeigt ein schematisches Ablaufdiagramm eines Ausführungsbeispiels eines Verfahrens zur verifizierbaren Ausgabe von Bildern.

In den Figuren sind gleiche oder funktionsgleiche Elemente mit denselben Bezugszeichen versehen worden, sofern nichts anderes angegeben ist.

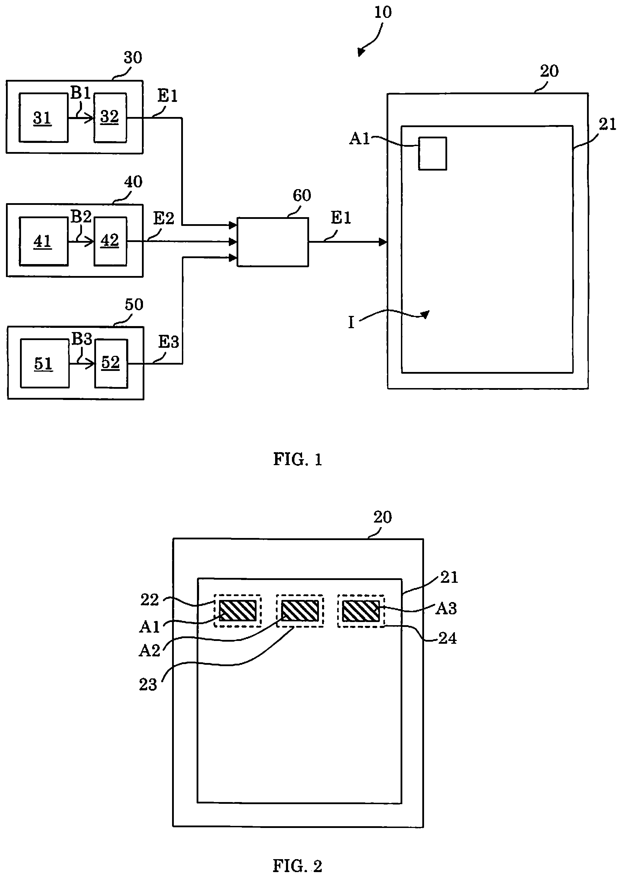

In Fig. 1 ist ein schematisches Blockschaubild eines ersten Ausführungsbeispiels einer Vorrichtung 10 zur verifizierbaren Ausgabe von Bildern dargestellt. Die Vorrichtung 10 der Fig. 1 umfasst zumindest einen Bildschirm 20 und eine Mehrzahl N von Kamera-Einrichtungen 30, 40, 50. Ohne Einschränkung der Allgemeinheit hat die Vorrichtung 10 der Fig. 1 einen Bildschirm 20 und drei Kamera-Einrichtungen 30, 40, 50 (N = 3).

Die jeweilige Kamera-Einrichtung 30, 40, 50 weist eine Kamera 31, 41, 51 sowie eine Integrations-Einheit 32, 42, 52 auf. Beispielsweise ist die Integrations-Einheit 32 als Teil der Kamera-Einrichtung 30 der Kamera 31 zugeordnet. Die Kameras 31, 41, 51 sind beispielsweise an einer Außenhaut eines Fahrzeugs, beispielsweise eines Panzers angeordnet. Der Bildschirm 20 ist beispielsweise in einem Innenraum des Fahrzeugs angeordnet.

Die jeweilige Kamera 31, 41, 51 ist dazu eingerichtet, jeweilige Bilddaten B1, B2, B3 basierend auf einer jeweiligen Aufnahme von Kamerabildern bereitzustellen. Die jeweilige Integrations-Einheit 32, 42, 52 ist dazu eingerichtet, erweiterte Bilddaten E1, E2, E3 basierend auf einer Integration eines kamera-spezifischen Anzeige-Elements A1, A2, A3 in die bereitgestellten Bilddaten B1, B2, B3 auszugeben. Die kamera-spezifischen Anzeige-Elemente A1, A2, A3 sind für die jeweilige Kamera 31, 41, 51 spezifisch und vorzugsweise jeweils unterschiedlich zueinander.

Beispielsweise erzeugt die Kamera 31 der in Fig. 1 links oben dargestellten Kamera-Einrichtung 30 die Bilddaten B1. Die Integrations-Einheit 32 empfängt diese Bilddaten B1, integriert ein Anzeige-Element A1, welches kamera-spezifisch für die Kamera 31 ist, in die bereitgestellten Bilddaten B1 und gibt ausgangsseitig die um das Anzeige-Element A1 erweiterten Bilddaten E1 aus.

Zwischen den Kamera-Einrichtungen 30, 40, 50 und dem Bildschirm 20 ist eine Multiplexer-Einrichtung 60 gekoppelt. Die Multiplexer-Einrichtung 60 ist dazu eingerichtet, aus den von den Kamera-Einrichtungen 30, 40, 50 empfangenen erweiterten Bilddaten E1, E2, E3 welche auszuwählen und die ausgewählten erweiterten Bilddaten - gemäß dem Beispiel der Fig. 1 die erweiterten Bilddaten E1 - ausgangsseitig für den Bildschirm 20 bereitzustellen. In anderen Worten wählt die Multiplexer-Einrichtung 60 aus den empfangenen erweiterten Bilddaten E1, E2, E3 aus und stellt die Ausgewählten für den Bildschirm 20 ausgangsseitig bereit.

Der Bildschirm 20 ist dabei dazu eingerichtet, ein Bild I mit dem kamera-spezifischen Anzeige-Element A1 in einem Ausgabebereich 21 des Bildschirms 20 basierend auf den von der Multiplexer-Einrichtung 60 bereitgestellten erweiterten Bilddaten E1 auszugeben. Die Auswahl der erweiterten Bilddaten E1 durch die Multiplexer-Einrichtung 60 in Fig. 1 ist rein beispielhaft. Aus Gründen der Veranschaulichung ist das Bild I in Fig. 1 nur durch das Bezugszeichen I und einen in den Anzeigebereich 21 weisenden Pfeil dargestellt, da es vorliegend auf das in dem Bild I integrierte, kamera-spezifische Anzeige-Element A1 ankommt.

Zwischen der jeweiligen Kamera-Einrichtung 30, 40, 50 und der Multiplexer-Einrichtung 60 können verschiedene weitere Einrichtungen angeordnet sein. Beispiele für diese weiteren Einrichtungen umfassen Filter, Verstärker, Signalverarbeitungs-Einheiten, Schnittstellen und/oder Schnittstellen-Adapter.

Des Weiteren können auch zwischen der Multiplexer-Einrichtung 60 und dem Bildschirm 20 weitere Einrichtungen angeordnet sein. Beispiele für solche Einrichtungen umfassen Umwandler, beispielsweise Videosignal-Umwandler, Verstärker und/oder Schnittstellen-Einheiten.

Fig. 2 zeigt ein schematisches Blockschaltbild eines ersten Ausführungsbeispiels eines Bildschirms 20 für eine Vorrichtung 10 nach Fig. 1. In dem Beispiel der Fig. 2 umfasst der Ausgabebereich 21 des Bildschirms 20 für ein jedes der kamera-spezifischen Anzeige-Elemente A1, A2, A3 einen eigenen kamera-spezifischen Teil-Ausgabebereich 22, 23, 24 zur Anzeige des jeweiligen kamera-spezifischen Anzeige-Elementes A1, A2, A3. So ist das Anzeige-Element A1, welches der Kamera 31 zugeordnet ist, in dem Teil-Ausgabebereich 22 darstellbar. Tatsächlich wird das Anzeige-Element A1 in dem Teil-Ausgabebereich 22 angezeigt, falls die Multiplexer-Einrichtung 60 die von der Kamera-Einrichtung 30 bereitgestellten erweiterten Bilddaten E1 zur Ausgabe für den Bildschirm 20 auswählt und ausgangsseitig bereitstellt.

Das Anzeige-Element A2, welches der Kamera 41 zugeordnet ist, ist in dem Teil-Ausgabebereich 23 graphisch darstellbar. Entsprechend ist das Anzeige-Element A3, welches der Kamera 51 zugeordnet ist, in dem Teil-Ausgabebereich 24 graphisch darstellbar. In dem Beispiel der Fig. 2 sind die Anzeige-Elemente A1, A2, A3 hinsichtlich ihrer Positionen in dem von dem Bildschirm 20 ausgegebenen Bild I in Folge der Verwendung unterschiedlicher Teil-Ausgabebereiche 22, 23, 24 unterschiedlich. Ferner sind die Anzeige-Elemente A1, A2, A3 in dem Beispiel der Fig. 2 hinsichtlich Form und Farbe identisch. Die gleiche Farbe der Anzeige-Elemente A1, A2, A3 in Fig. 2 wird durch eine identische Schraffur gekennzeichnet. Auch im Weiteren steht die Schraffur eines Anzeige-Elementes A1, A2, A3 für die Farbe des Anzeige-Elements A1, A2, A3.

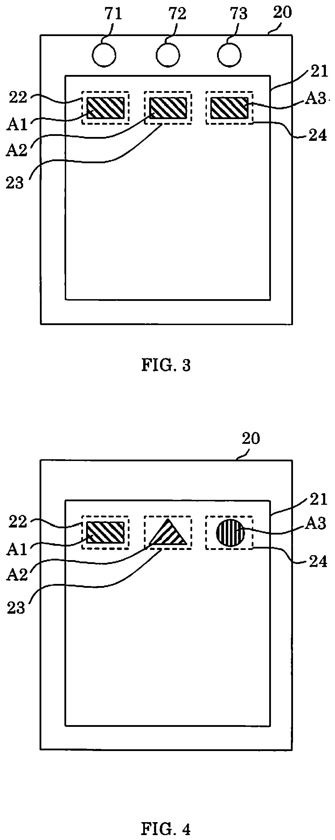

In Fig. 3 ist ein schematisches Blockschaltbild eines zweiten Ausführungsbeispiels eines Bildschirms 20 für eine Vorrichtung 10 nach Fig. 1 dargestellt.

Das zweite Ausführungsbeispiel der Fig. 3 basiert auf dem ersten Ausführungsbeispiel der Fig. 2 des Bildschirms 20 und umfasst sämtliche Merkmale des ersten Ausführungsbeispiels der Fig. 2. Darüber hinaus umfasst der Bildschirm 20 der Fig. 3 außerhalb seines Anzeigebereichs 21 drei kamera-spezifische Anzeigemittel 71, 72, 73, wobei jedem der drei Anzeigemittel 71, 72, 73 genau eine der drei Kameras 31, 41, 51 zugeordnet ist.

In diesem Beispiel ist das Anzeigemittel 71 der Kamera 31 zugeordnet. Das Anzeigemittel 72 ist der Kamera 41 zugeordnet und das Anzeigemittel 73 ist der Kamera 51 zugeordnet. Mit anderen Worten sind der Kamera 31 das Anzeige-Element A1 und das Anzeigemittel 71 zugeordnet. Der Kamera 41 sind das Anzeige-Element A2 und das Anzeigemittel 72 zugeordnet. Der Kamera 51 sind das Anzeige-Element A3 und das Anzeigemittel 73 zugeordnet. In dem Beispiel der Fig. 3 ist der Bildschirm 20 derart ausgebildet, dass das jeweilige kamera-spezifische Anzeigemittel 71, 72, 73 oberhalb des jeweiligen kamera-spezifischen Teil-Ausgabebereichs 22, 23, 24 angeordnet ist. Somit ergibt sich für den Benutzer des Bildschirms 20 eine einfache optische Relation zwischen dem Anzeige-Element A1 und dem Anzeigemittel 71, welche beide der Kamera 31 zugeordnet sind. Entsprechendes gilt für die optische Relation zwischen dem Anzeige-Element A2 und dem Anzeigemittel 72. Gleiches gilt für die optische Relation zwischen dem Anzeige-Element A3 und dem Anzeigemittel 73.

Das jeweilige kamera-spezifische Anzeigemittel 71, 72, 73 ist beispielsweise als ein Leuchttaster zur Eingabe eines Benutzerbefehls zur Auswahl der dem Anzeigemittel 71, 72, 73 zugeordneten Kamera 31, 41, 51 ausgebildet. Drückt beispielsweise der Benutzer den Leuchttaster 71, so gibt er damit einen Benutzerbefehl ein, welcher bewirkt, dass die dem Leuchttaster 71 zugeordnete Kamera 31 ausgewählt wird. Dies hat zur Folge, dass die Multiplexer-Einrichtung 60 die erweiterten Bilddaten E1 der Kamera-Einrichtung 30 an den Bildschirm 20 ausgibt. Die verschiedenen Leuchttaster 71, 72, 73 können auch unterschiedlich farbige Leuchtmittel aufweisen.

Fig. 4 zeigt ein schematisches Blockschaltbild eines dritten Ausführungsbeispiels eines Bildschirms 20 für eine Vorrichtung 10 nach Fig. 1.

Das dritte Ausführungsbeispiel der Fig. 4 unterscheidet sich von dem ersten Ausführungsbeispiel der Fig. 2 in der Ausbildung der Anzeige-Elemente A1, A2, A3. In dem Beispiel der Fig. 4 sind die Anzeige-Elemente A1, A2, A3 in ihrer Position in dem Anzeigebereich 21, in ihrer Form und ihrer Farbe (illustriert durch unterschiedliche Schraffuren der Anzeige-Elemente A1, A2, A3) unterschiedlich. Die Unterschiedlichkeit in Form, Position und Farbe erleichtert für den Benutzer eine schnelle und sichere visuelle Wahrnehmung und damit Verifizierung derjenigen Kamera 31, 41, 51, deren Bilder aktuell auf dem Bildschirm 20 ausgegeben werden.

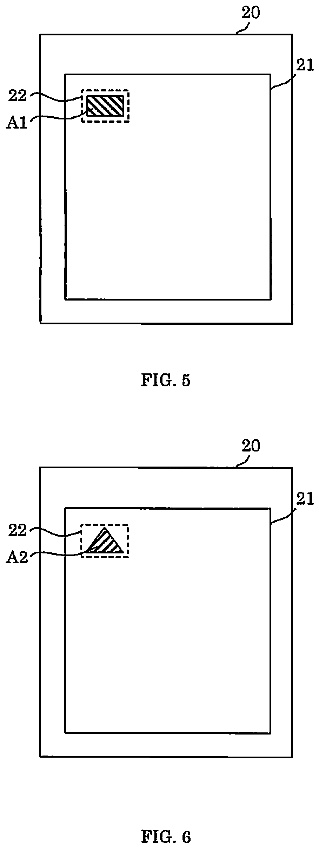

Die Fig. 5 - 7 zeigen schematische Blockschaltbilder eines vierten Ausführungsbeispiels eines Bildschirms 20 für eine Vorrichtung 10 nach Fig. 1.

Das vierte Ausführungsbeispiel gemäß der Fig. 5 - 7 unterscheidet sich von dem dritten Ausführungsbeispiel der Fig. 4 dahingehend, dass die Anzeige-Elemente A1, A2, A3 nur hinsichtlich ihrer Form und hinsichtlich ihrer Farbe unterschiedlich sind, aber gleich hinsichtlich ihrer Position in dem Anzeigebereich 21. Entsprechend weist der Anzeigebereich 21 des Bildschirms 20 gemäß der Fig. 5 - 7 nur einen einzigen Teil-Ausgabebereich 22 auf, welcher - je nach Wahl der die Bilder bereitstellenden Kamera 31, 41, 51 - eines der Anzeige-Elemente A1, A2, A3 darstellt.

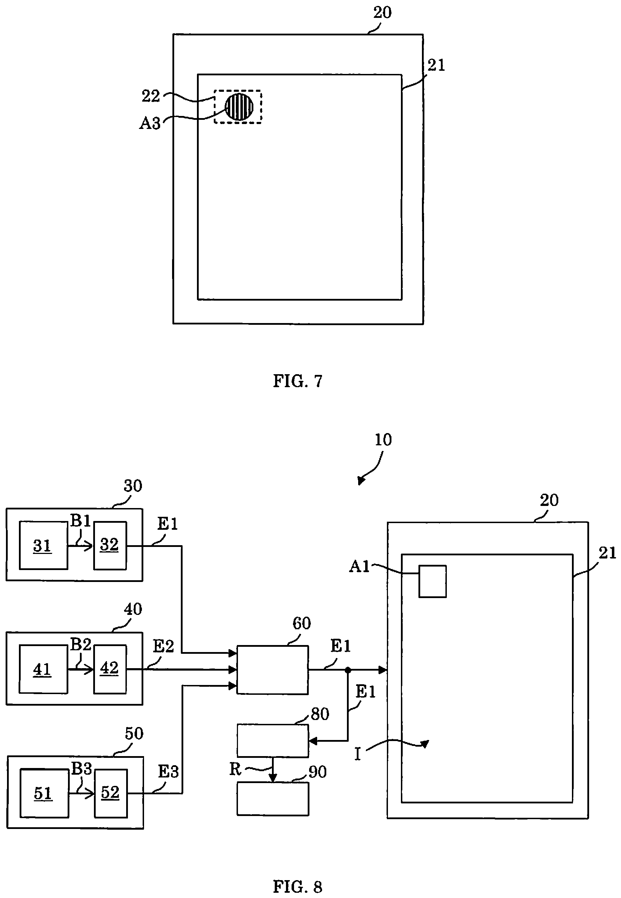

In Fig. 5 wird das Anzeige-Element A1 für die Kamera 31 in dem Teil-Ausgabebereich 22 dargestellt. In Fig. 6 hingegen wird das Anzeige-Element A2 für die Kamera 41 in dem Teil-Ausgabebereich 22 dargestellt und in der Fig. 7 wird das Anzeige-Element A3 für die Kamera 51 in dem Teil-Ausgabebereich 22 dargestellt.

Fig. 8 zeigt ein schematisches Blockschaltbild eines zweiten Ausführungsbeispiels einer Vorrichtung 10 zur verifizierbaren Ausgabe von Bildern.

Das zweite Ausführungsbeispiel der Fig. 8 basiert auf dem ersten Ausführungsbeispiel der Fig. 1 und umfasst sämtliche Merkmale des ersten Ausführungsbeispiels der Fig. 1.

Darüber hinaus umfasst die Vorrichtung 10 der Fig. 8 eine Analyse-Einheit 80 sowie eine Vergleichs-Einheit 90. Die Analyse-Einheit 80 ist dazu eingerichtet, ein Analyse-Ergebnis R zur Ermittlung der die Bilddaten bereitstellenden Kamera 31, 41, 51 basierend auf einer Analyse des kamera-spezifischen Anzeige-Elements A1, A2, A3 innerhalb der von der Multiplexer-Einrichtung 60 bereitgestellten erweiterten Bilddaten E1, E2, E3 (E1 in dem Beispiel der Fig. 1) zu ermitteln.

Die Vergleichs-Einheit 90 ist dazu eingerichtet, das von der Analyse-Einheit 80 ermittelte Analyse-Ergebnis R mit einem aktuellen, von dem Benutzer des Bildschirms 20 eingegebenen Benutzerbefehl zur Auswahl einer der Kameras 31, 41, 51 zu vergleichen. In dem Beispiel der Fig. 8 stellt die Multiplexer-Einrichtung 60 ausgangsseitig die erweiterten Bilddaten E1 der Kamera-Einrichtung 30 mit der Kamera 31 bereit. Falls der Benutzer mit seinem aktuell eingegebenen Benutzerbefehl die Kamera 31 ausgewählt hat, stimmt die ausgewählte Kamera (Kamera 31) mit der Kamera gemäß dem Analyse-Ergebnis R (Kamera 31) überein. Aufgrund dieser Übereinstimmung ist beispielhaft festgestellt, dass kein Fehler vorliegt.

Ferner ist hierbei die Multiplexer-Einrichtung 60 vorzugsweise dazu eingerichtet, die Auswahl der erweiterten Bilddaten E1 zur ausgangsseitigen Bereitstellung für den Bildschirm 20 aus den von den Kamera-Einrichtungen 30, 40, 50 erweiterten Bilddaten E1, E2, E3 in Abhängigkeit des aktuellen Benutzerbefehls des Benutzers zu treffen.

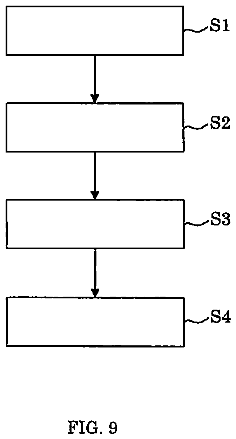

In Fig. 9 ist ein schematisches Ablaufdiagramm eines Ausführungsbeispiels eines Verfahrens zur verifizierbaren Ausgabe von Bildern dargestellt. Das Verfahren der Fig. 9 umfasst die folgenden Verfahrensschritte S1 - S4:
In Schritt S1 werden Bilddaten B1, B2, B3 basierend auf einer Aufnahme zumindest eines Kamerabilds durch eine jeweilige Kamera 31, 41, 51 einer Mehrzahl N von Kamera-Einrichtungen 30, 40, 50 bereitgestellt. N ist beispielsweise 3.

In Schritt S2 werden jeweilige erweiterte Bilddaten E1, E2, E3 basierend auf einer Integration eines kamera-spezifischen Anzeige-Elements A1, A2, A3 in die bereitgestellten Bilddaten B1, B2, B3 an eine Multiplexer-Einrichtung 60 durch die Mehrzahl von Kamera-Einrichtungen 30, 40, 50 ausgegeben.

In Schritt S3 werden ausgewählte erweiterte Bilddaten E1, E2, E3 für den Bildschirm 20 aus den von den Kamera-Einrichtungen 30, 40, 50 empfangenen erweiterten Bilddaten E1, E2, E3 durch die Multiplexer-Einrichtung 60 bereitgestellt.

In Schritt S4 wird ein Bild I mit dem kamera-spezifischen Anzeige-Element A1 (siehe beispielsweise Fig. 1) in einem Ausgabebereich 21 des Bildschirms 20 basierend auf den von der Multiplexer-Einrichtung 60 bereitgestellten erweiterten Bilddaten E1, E2, E3 ausgegeben.

Obwohl die vorliegende Erfindung anhand von Ausführungsbeispielen beschrieben wurde, ist sie vielfältig modifizierbar. Beispielsweise ist es möglich, dass das jeweilige Anzeige-Element direkt in den optischen Kanal der jeweiligen Kamera integriert wird.

### BEZUGSZEICHENLISTE

- 10: Vorrichtung
- 20: Bildschirm
- 21: Ausgabebereich
- 22: Teil-Ausgabebereich für Kamera 31
- 23: Teil-Ausgabebereich für Kamera 41
- 24: Teil-Ausgabebereich für Kamera 51
- 30: Kamera-Einrichtung
- 31: Kamera
- 32: Integrations-Einheit
- 40: Kamera-Einrichtung
- 41: Kamera
- 42: Integrations-Einheit
- 50: Kamera-Einrichtung
- 51: Kamera
- 52: Integrations-Einheit
- 60: Multiplexer-Einrichtung
- 71: Anzeigemittel für Kamera
- 72: Anzeigemittel für Kamera
- 73: Anzeigemittel für Kamera
- 80: Analyse-Einheit
- 90: Vergleichs-Einheit
- A1: Anzeige-Element für Kamera 31
- A2: Anzeige-Element für Kamera 41
- A3: Anzeige-Element für Kamera 51
- B1: Bilddaten der Kamera 31
- B2: Bilddaten der Kamera 41
- B3: Bilddaten der Kamera 51
- E1: erwartete Bilddaten der Integrations-Einheit 32
- E2: erwartete Bilddaten der Integrations-Einheit 42
- E3: erwartete Bilddaten der Integrations-Einheit 52
- I: Bild
- R: Analyse-Ergebnis
- S1: Verfahrensschritt
- S2: Verfahrensschritt
- S3: Verfahrensschritt
- S4: Verfahrensschritt

## Patentansprüche

1. Vorrichtung (10) zur verifizierbaren Ausgabe von Bildern, mit:
einem Bildschirm (20) zur Ausgabe von Bildern basierend auf Bilddaten,
einer Mehrzahl N von Kamera-Einrichtungen (30, 40, 50), mit N ≥ 2, wobei eine jede der N Kamera-Einrichtungen (30, 40, 50) eine Kamera (31, 41, 51) zur Bereitstellung von Bilddaten (B1, B2, B3) basierend auf einer Aufnahme zumindest eines Kamerabilds und eine Integrations-Einheit (32, 42, 52) zur Ausgabe von erweiterten Bilddaten (E1, E2, E3) basierend auf einer Integration eines kamera-spezifischen Anzeige-Elements (A1, A2, A3) in die bereitgestellten Bilddaten (B1, B2, B3) aufweist, und
einer zwischen den N Kamera-Einrichtungen (30, 40, 50) und dem Bildschirm (20) gekoppelten Multiplexer-Einrichtung (60), welche dazu eingerichtet ist, aus den von den N Kamera-Einrichtungen (30, 40, 50) empfangenen erweiterten Bilddaten (E1, E2, E3) ausgewählte weitere Bilddaten (E1) in Abhängigkeit eines aktuellen von einem Benutzer des Bildschirms (20) eingegebenen Benutzerbefehls ausgangsseitig für den Bildschirm (20) bereitzustellen,
wobei der Bildschirm (20) dazu eingerichtet ist, ein Bild (I) mit dem kamera-spezifischen Anzeige-Element (A1) in einem Ausgabebereich (21) des Bildschirms (20) basierend auf den von der Multiplexer-Einrichtung (60) bereitgestellten erweiterten Bilddaten (E1) auszugeben,
wobei die Vorrichtung (10) ferner umfasst:
eine Analyse-Einheit (80), welche dazu eingerichtet ist, ein Analyse-Ergebnis (R) zur Ermittlung der die Bilddaten bereitstellenden Kamera (31, 41, 51) basierend auf einer Analyse des spezifischen Anzeige-Elements (A1, A2, A3) innerhalb der von der Multiplexer-Einrichtung (60) bereitgestellten erweiterten Bilddaten (E1) zu ermitteln, und
eine Vergleichs-Einheit (90) zum Vergleichen des von der Analyse-Einheit (80) ermittelten Analyse-Ergebnisses (R) mit dem aktuellen eingegebenen Benutzerbefehl zur Auswahl einer der N Kameras (31, 41, 51).

2. Vorrichtung nach Anspruch 1,
**dadurch gekennzeichnet,**
**dass** die N kamera-spezifischen Anzeige-Elemente (A1, A2, A3) für die N Kameras (31, 41, 51) jeweils unterschiedlich zueinander sind.

3. Vorrichtung nach Anspruch 1 oder 2,
**dadurch gekennzeichnet,**
**dass** die N kamera-spezifischen Anzeige-Elemente (A1, A2, A3) unterschiedliche Positionen in dem von dem Bildschirm (20) ausgegebenen Bild (I) aufweisen.

4. Vorrichtung nach Anspruch 3,
**dadurch gekennzeichnet,**
**dass** der Bildschirm (20) derart ausgebildet ist, dass der Ausgabebereich (21) für ein jedes der N kamera-spezifischen Anzeige-Elemente (A1, A2, A3) einen eigenen kamera-spezifischen Teil-Ausgabebereich (22, 23, 24) zur Anzeige des kamera-spezifischen Anzeige-Elementes (A1, A2, A3) umfasst.

5. Vorrichtung nach Anspruch 4,
**dadurch gekennzeichnet,**
**dass** der Bildschirm (20) außerhalb seines Anzeigebereichs (21) N kamera-spezifische Anzeigemittel (71, 72, 73) aufweist, wobei jedem der N Anzeigemittel (71, 72, 73) genau eine der N Kameras (31, 41, 51) zugeordnet ist.

6. Vorrichtung nach Anspruch 5,
**dadurch gekennzeichnet,**
**dass** der Bildschirm (20) derart ausgebildet ist, dass das jeweilige kamera-spezifische Anzeigemittel (71, 72, 73) oberhalb des jeweiligen kamera-spezifischen Teil-Ausgabebereichs (22, 23, 24) angeordnet ist.

7. Vorrichtung nach Anspruch 5,
**dadurch gekennzeichnet,**
**dass** der Bildschirm (20) derart ausgebildet ist, dass das jeweilige kamera-spezifische Anzeigemittel (71, 72, 73) unterhalb des jeweiligen kamera-spezifischen Teil-Ausgabebereichs (22, 23, 24) angeordnet ist.

8. Vorrichtung nach einem der Ansprüche 5 bis 7,
**dadurch gekennzeichnet,**
**dass** das jeweilige kamera-spezifische Anzeigemittel (71, 72, 73) als ein Leuchttaster zur Eingabe eines Benutzerbefehls zur Auswahl der dem Anzeigemittel (71, 72, 73) zugeordneten Kamera (31, 41, 51) ausgebildet ist.

9. Vorrichtung nach Anspruch 8,
**dadurch gekennzeichnet,**
**dass** die N Leuchttaster (71, 72, 73) unterschiedlich farbige Leuchtmittel aufweisen.

10. Vorrichtung nach einem der Ansprüche 1 bis 9,
**dadurch gekennzeichnet,**
**dass** die N kamera-spezifischen Anzeige-Elemente (A1, A2, A3) unterschiedliche Formen und/oder unterschiedliche Farben in dem von dem Bildschirm (20) ausgegebenen Bild (I) aufweisen.

11. Fahrzeug, insbesondere militärisches Fahrzeug, mit einer Vorrichtung (10) zur verifizierbaren Ausgabe von Bildern nach einem der Ansprüche 1 bis 10, wobei die Kameras (31, 41, 51) der N Kamera-Einrichtungen (30, 40, 50) an einer Außenhaut des Fahrzeugs und der Bildschirm (20) in einem Raum des Fahrzeugs angeordnet sind.

12. Verfahren zur verifizierbaren Ausgabe von Bildern durch einen Bildschirm (20), mit:
Bereitstellen (S1) von Bilddaten (B1, B2, B3) basierend auf einer Aufnahme zumindest eines Kamerabilds durch eine jeweilige Kamera (31, 41, 51) einer Mehrzahl N von Kamera-Einrichtungen (30, 40, 50), mit N ≥ 2,
Ausgeben (S2) von jeweiligen erweiterten Bilddaten (E1, E2, E3) basierend auf einer Integration eines kamera-spezifischen Anzeige-Elements (A1, A2, A3) in die bereitgestellten Bilddaten (B1, B2, B3) an eine Multiplexer-Einrichtung (60) durch die Mehrzahl N von Kamera-Einrichtungen (30, 40, 50),
Bereitzustellen (S3) von ausgewählten erweiterten Bilddaten (E1) in Abhängigkeit eines aktuellen von einem Benutzer des Bildschirms (20) eingegebenen Benutzerbefehls für den Bildschirm (20) aus den von den N Kamera-Einrichtungen (30, 40, 50) empfangenen erweiterten Bilddaten (E1, E2, E3) durch die Multiplexer-Einrichtung (60),
Ausgeben (S4) eines Bilds (I) mit dem kamera-spezifischen Anzeige-Element (A1) in einem Ausgabebereich (21) des Bildschirms (20) basierend auf den von der Multiplexer-Einrichtung (60) bereitgestellten erweiterten Bilddaten (E1),
Ermitteln eines Analyse-Ergebnisses (R) zur Ermittlung der die Bilddaten bereitstellenden Kamera (31, 41, 51) basierend auf einer Analyse des spezifischen Anzeige-Elements (A1, A2, A3) innerhalb der von der Multiplexer-Einrichtung (60) bereitgestellten erweiterten Bilddaten (E1), und
Vergleichen des ermittelten Analyse-Ergebnisses (R) mit dem aktuellen eingegebenen Benutzerbefehl zur Auswahl einer der N Kameras (31, 41, 51).

## Claims

1. Apparatus (10) for verifiable outputting images, comprising:
a monitor (20) for outputting images based on image data,
a plurality N of camera devices (30, 40, 50), with N ≥ 2, wherein each one of the N camera devices (30, 40, 50) has a camera (31, 41, 51) for providing image data (B1, B2, B3) based on recording of at least one camera image and an integration unit (32, 42, 52) for outputting extended image data (E1, E2, E3) based on an integration of a camera-specific display element (A1, A2, A3) into the provided image data (B1, B2, B3), and
a multiplexer device (60) coupled between the N camera devices (30, 40, 50) and the monitor (20), which is configured to provide selected further image data (E1) out of the extended image data (E1, E2, E3) received from the N camera devices (30, 40, 50) on the output side for the monitor (20) in dependence on a current user command entered by a user of the monitor (20),
wherein the monitor (20) is configured to output an image (I) with the camera-specific display element (A1) in an output area (21) of the monitor (20) based on the extended image data (E1) provided by the multiplexer device (60),
wherein the apparatus (10) further comprises:
an analysis unit (80) configured to determine an analysis result (R) for detecting the camera (31, 41, 51) providing the image data based on an analysis of the specific display element (A1, A2, A3) within the extended image data (E1) provided by the multiplexer device (60), and
a comparison unit (90) for comparing the analysis result (R) determined by the analysis unit (80) with the current entered user command for selecting one of the N cameras (31, 41, 51).

2. Apparatus according to claim 1,
**characterized in that**,
the N camera-specific display elements (A1, A2, A3) for the N cameras (31, 41, 51) are each different from one another.

3. Apparatus according to claim 1 or 2,
**characterized in that**,
the N camera-specific display elements (A1, A2, A3) have different positions in the image (I) output by the monitor (20).

4. Apparatus according to claim 3,
**characterized in that**,
the monitor (20) is formed such that the output area (21) comprises, for each one of the N camera-specific display elements (A1, A2, A3), an own camera-specific partial output area (22, 23, 24) for displaying the camera-specific display element (A1, A2, A3).

5. Apparatus according to claim 4,
**characterized in that**,
the monitor (20) has N camera-specific display means (71, 72, 73) outside its display area (21), wherein exactly one of the N cameras (31, 41, 51) is assigned to each of the N display means (71, 72, 73).

6. Apparatus according to claim 5,
**characterized in that**,
the monitor (20) is formed such that the respective camera-specific display means (71, 72, 73) is arranged above the respective camera-specific partial output area (22, 23, 24).

7. Apparatus according to claim 5,
**characterized in that**,
the monitor (20) is formed such that the respective camera-specific display means (71, 72, 73) is arranged below the respective camera-specific partial output area (22, 23, 24).

8. Apparatus according to one of claims 5 to 7,
**characterized in that**,
the respective camera-specific display means (71, 72, 73) is formed as an illuminated push-button for entering a user command for selecting the camera (31, 41, 51) assigned to the display means (71, 72, 73).

9. Apparatus according to claim 8,
**characterized in that**,
the N illuminated push-buttons (71, 72, 73) have differently colored lighting means.

10. Apparatus according to one of claims 1 to 9,
**characterized in that**,
the N camera-specific display elements (A1, A2, A3) have different shapes and/or different colors in the image (I) output by the monitor (20).

11. Vehicle, in particular a military vehicle, having an apparatus (10) for verifiable outputting images according to one of claims 1 to 10, wherein the cameras (31, 41, 51) of the N camera devices (30, 40, 50) are arranged at an outer skin of the vehicle and the monitor (20) is arranged in a room of the vehicle.

12. Method for verifiable outputting images by a monitor (20), with:
providing (S1) image data (B1, B2, B3) based on recording of at least one camera image by a respective camera (31, 41, 51) of a plurality N of camera devices (30, 40, 50), with N ≥ 2,
outputting (S2) respective extended image data (E1, E2, E3) based on an integration of a camera-specific display element (A1, A2, A3) into the provided image data (B1, B2, B3) to a multiplexer device (60) by the plurality N of camera devices (30, 40, 50),
providing (S3) selected extended image data (E1) in dependence on a current user command entered by a user of the monitor (20) for the monitor (20) out of the extended image data (E1, E2, E3) received from the N camera devices (30, 40, 50) by the multiplexer device (60),
outputting (S4) an image (I) with the camera-specific display element (A1) in an output area (21) of the monitor (20) based on the extended image data (E1) provided by the multiplexer device (60),
determining an analysis result (R) for detecting the camera (31, 41, 51) providing the image data based on an analysis of the specific display element (A1, A2, A3) within the extended image data (E1) provided by the multiplexer device (60), and
comparing the determined analysis result (R) with the current entered user command for selecting one of the N cameras (31, 41, 51).

## Revendications

1. Dispositif (10) d'affichage vérifiable d'images, comprenant :
un écran (20) pour l'affichage d'images basées sur des données d'images,
une pluralité N de dispositifs caméra (30, 40, 50), avec N ≥ 2, dans laquelle chacun des N dispositifs caméra (30, 40, 50) comprend une caméra (31, 41, 51) pour fournir des données d'image (B1, B2, B3) basé sur un enregistrement d'au moins une image de caméra et une unité d'intégration (32, 42, 52) pour sortir des données d'image étendues (E1, E2, E3) basé sur une intégration d'un élément d'affichage spécifique à la caméra (A1, A2, A3) dans les données d'image fournies (B1, B2, B3), et
un dispositif multiplexeur (60) couplé entre les N dispositifs caméra (30, 40, 50) et l'écran (20), le dispositif multiplexeur (60) étant configuré pour fournir des données d'image supplémentaires sélectionnées (E1) à partir des données d'image étendues (E1, E2, E3) reçues des N dispositifs caméra (30, 40, 50) du côté sortie pour l'écran (20) en fonction d'une commande d'utilisateur actuelle entrée par un utilisateur de l'écran (20),
dans lequel l'écran (20) est configuré pour afficher une image (I) avec l'élément d'affichage spécifique à la caméra (A1) dans une zone d'affichage (21) de l'écran (20) sur la base des données d'image étendues (E1) fournies par le dispositif multiplexeur (60),
le dispositif (10) comprenant en outre :
une unité d'analyse (80) configurée pour obtenir un résultat d'analyse (R) pour déterminer la caméra (31, 41, 51) fournissant les données d'image sur la base d'une analyse de l'élément d'affichage spécifique (A1, A2, A3) dans les données d'image étendues (E1) fournies par le dispositif multiplexeur (60), et
une unité de comparaison (90) pour comparer le résultat de l'analyse (R) obtenu par l'unité d'analyse (80) avec la commande utilisateur actuelle entrée pour sélectionner une des N caméras (31, 41, 51).

2. Dispositif selon la revendication 1,
**caractérisé en ce que**
les N éléments d'affichage spécifiques à la caméra (A1, A2, A3) pour les N caméras (31, 41, 51) sont chacun différents les uns des autres.

3. Dispositif selon la revendication 1 ou 2,
**caractérisé en ce que**
les N éléments d'affichage spécifiques à la caméra (A1, A2, A3) ont des positions différentes dans l'image (I) affichée par l'écran (20).

4. Dispositif selon la revendication 3,
**caractérisé en ce que**
l'écran (20) est conçu de telle sorte que la zone de d'affichage (21) pour chacun des N éléments d'affichage spécifiques à la caméra (A1, A2, A3) comprend une zone d'affichage partielle séparée spécifique à la caméra (22, 23, 24) pour l'affichage de l'élément d'affichage spécifique à la caméra (A1, A2, A3).

5. Dispositif selon la revendication 4,
**caractérisé en ce que**
l'écran (20) comporte N moyens d'affichage spécifiques à la caméra (71, 72, 73) en dehors de sa zone d'affichage (21), chacun des N moyens d'affichage (71, 72, 73) se voyant attribuer exactement une des N caméras (31, 41, 51).

6. Dispositif selon la revendication 5,
**caractérisé en ce que**
l'écran (20) est conçu de telle sorte que les moyens d'affichage spécifiques à la caméra (71, 72, 73) sont disposés au-dessus de la zone d'affichage partielle spécifique à la caméra (22, 23, 24).

7. Dispositif selon la revendication 5,
**caractérisé en ce que**
l'écran (20) est conçu de telle sorte que les moyens d'affichage spécifiques à la caméra (71, 72, 73) sont disposés en dessous de la zone d'affichage partielle spécifique à la caméra (22, 23, 24).

8. Dispositif selon l'une des revendications 5 à 7,
**caractérisé en ce que**
chaque moyen d'affichage spécifique à la caméra (71, 72, 73) est conçu comme un bouton lumineux permettant d'entrer une commande utilisateur pour sélectionner la caméra (31, 41, 51) affectée au moyen d'affichage (71, 72, 73).

9. Dispositif selon la revendication 8,
**caractérisé en ce que**
les N boutons lumineux (71, 72, 73) ont des sources d'illumination de couleurs différentes.

10. Dispositif selon l'une des revendications 1 à 9,
**caractérisé en ce que**
les N éléments d'affichage spécifique à la caméra (A1, A2, A3) ont des formes et/ou des couleurs différentes dans l'image (I) affichée par l'écran (20).

11. Véhicule, en particulier véhicule militaire, comprenant un dispositif (10) d'affichage vérifiable d'images selon l'une des revendications 1 à 10, les caméras (31, 41, 51) des N dispositifs caméra (30, 40, 50) étant disposées sur une peau extérieure du véhicule et l'écran (20) étant disposé dans un espace du véhicule.

12. Procédé d'affichage vérifiable d'images avec un écran (20), comprenant :
fournir (S1) des données d'image (B1, B2, B3) basé sur un enregistrement d'au moins une image de caméra par une caméra (31, 41, 51) respective d'une pluralité N de dispositifs caméra (30, 40, 50), avec N ≥ 2,
sortir (S2) des données d'image étendues (E1, E2, E3) respectives basé sur une intégration d'un élément d'affichage spécifique à la caméra (A1, A2, A3) dans les données d'image (B1, B2, B3) fournies vers un dispositif multiplexeur (60) par la pluralité N de dispositifs caméra (30, 40, 50),
fournir (S3) des données d'images étendues sélectionnées (E1) en réponse à une commande actuelle entrée par un utilisateur de l'écran (20) pour l'écran (20) à partir des données d'images étendues (E1, E2, E3) reçues des N dispositifs caméra (30, 40, 50) par le dispositif multiplexeur (60),
afficher (S4) une image (I) avec l'élément d'affichage spécifique à la caméra (A1) dans une zone d'affichage (21) de l'écran (20) sur la base des données d'image étendues (E1) fournies par le dispositif multiplexeur (60),
déterminer un résultat d'analyse (R) pour déterminer la caméra (31, 41, 51) fournissant les données d'images basé sur une analyse de l'élément d'affichage spécifique (A1, A2, A3) dans les données d'image étendues (E1) fournies par le dispositif multiplexeur (60), et
comparer le résultat d'analyse déterminé (R) avec la commande utilisateur actuelle entrée pour sélectionner l'une des N caméras (31, 41, 51).
